Europäisches Patentamt

European Patent Office

Office européen des brevets

(11) Veröffentlichungsnummer: **0 128 528**
**B1**

(12) # EUROPÄISCHE PATENTSCHRIFT

(45) Veröffentlichungstag der Patentschrift:
**05.11.86**

(51) Int. Cl.⁴: **F 16 B 5/02,** E 04 B 1/60,
E 04 D 3/36

(21) Anmeldenummer: **84106477.7**

(22) Anmeldetag: **06.06.84**

(54) **Befestigungselement für die Befestigung von profilierten Bautafeln an einer Unterkonstruktion.**

(30) Priorität: **08.06.83  DE 8316679 U**

(43) Veröffentlichungstag der Anmeldung:
**19.12.84 Patentblatt 84/51**

(45) Bekanntmachung des Hinweises auf die Patenterteilung:
**05.11.86 Patentblatt 86/45**

(84) Benannte Vertragsstaaten:
**AT BE CH DE FR GB IT LI LU NL SE**

(56) Entgegenhaltungen:
**DE-A-2 716 388**
**DE-B-2 611 395**
**DE-B-2 707 291**

**Prospekt der Fa. L.R. Etanco, S.A.**

(73) Patentinhaber: **EJOT Baubefestigungen GmbH,
Postfach 1135 In der Stockwiese 35, D-5928 Bad
Laasphe 1 (DE)**

(72) Erfinder: **Kniese, Arnd, Vor dem Fang 28, D-5928
Bad Laasphe 1 (DE)**
Erfinder: **Schukey, Hartmut, Dorfstrasse 31, D-5920
Bad Berleburg- Altertshausen (DE)**

(74) Vertreter: **Schlee, Richard, Patentanwälte Dipl.-
Ing. R. Schlee Dipl.- Ing. A. Missling
Bismarckstrasse 43, D-6300 Giessen 1 (DE)**

## Beschreibung

Die Erfindung bezieht sich auf ein Befestigungselement für die Befestigung von profilierten Bautafeln an einer Unterkonstruktion, bestehend aus einem an die Wellen- oder Sickenform der Bautafel angepaßten Blech, in dem sich ein Loch zum Durchstecken einer Befestigungsschraube befindet und das seitlich des Loches angeordnete Versteifungssicken aufweist, die dem Profilierungsquerschnitt folgen (Prospekt der Firma L. R. Etanco S. A.)

Solche Befestigungselemente werden in großer Zahl benötigt, um Bautafeln, insbesondere Deckentafeln, zu befestigen. Hierbei wird das Befestigungselement so auf die Bautafel aufgelegt, daß es eine erhabene Welle oder Sicke übergreift. Die Befestigungsschraube wird durch das Loch im Befestigungselement hindurchgesteckt und in die Unterkonstruktion eingeschraubt. Zur Abdichtung des Durchgriffsloches der Schraube kann das Befestigungselement eine elastische Dichtungsschicht aufweisen. Es ist jedoch auch möglich, eine separate Dichtung zu verwenden oder auch eine streichfähige Dichtungsmasse. Die Befefestigungselemente haben die Aufgabe, von der Schraube ausgeübte Haltekräfte in die Bautafel einzuleiten. Hierbei wird das Befestigungselement auf Biegung beansprucht. Bei übermäßiger Beanspruchung wird das Befestigungselement aufgebogen, wobei gleichzeitig die Bauplatte beschädigt wird und sich auch von der Befestigungsstelle losreißen kann, wobei das Befestigungselement das Durchsteckloch für die Schraube so weit aufreißt, dan es durch die Bautafel hindurchschlüpfen kann. Bei Dachtafeln werden große Haltekräfte insbesondere dann nötig, wenn bei starkem Wind Sogkräfte entstehen.

Bei einem bekannten Befestigungsselement der eingangs genannten Art haben die Versteifungssicken über ihre gesamte Länge einen gleichbleihenden Querschnitt. Dieser Querschnitt kann nur eine begrenzte Höhe hahen, da zu hohe Sicken der profilierung des Befestigungselementes aus verformungstechnischen Gründen nicht folgen können. Die Biegesteifigkeit solcher Befestigungslemente wird zwar durch die Sicken verbessert, ist jedoch nicht so groß, daß alle Forderungen erfüllt werden können.

Der Erfindung liegt die Aufgabe zugrunde, ein Befestigungselement der eingangs genannten Art so auszubilden, daß bei gegebenem Materialaufwand eine wesentlich größere Biegesteifigkeit erreicht wird als mit dem bekannten Befestigungselement.

Diese Aufgabe wird nach der Erfindung dadurch gelöst, daß die Versteifungssicken in ihrer Längsmitte am höchsten sind und ihre Höhe zu den Sickenenden hin abnimmt.

Bei einem so ausgebildeten Befestigungselement ist die Biegesteifigkeit dort am größten, wo das größte Biegemoment auftritt.

Das größte Biegemoment nämlich entsteht im Bereich der Befestigungsschraube und nimmt nach den Enden des Befestigungselementes hin ab. Man kann deshalb die Sicken zum Rand hin ohne Nachteil so flach ausbilden, daß es auch möglich ist, die Sicken über Biegungen oder Abkantungen hinweg fortzuführen. Das erfindungsgemäße Befestigungselement entspricht der tatsächlichen Beanspruchung an jeder Stelle. Dadurch wird die Festigkeit des Bleches optimal ausgenutzt, so daß bei gegebenem Materialaufwand insgesamt eine wesentlich größere Steifigkeit erreicht wird als dies bei bekannten Befestigungselementen der Fall ist.

Vorzugsweise ist gemäß Anspruch 2 beiderseits des Loches je eine Versteifungssicke angeordnet. Unter die Erfindung fallen aber auch Ausführungsformen, bei denen das Befestigungselement mehr als zwei Sicken aufweist. Die Versteifungssicken sind vorzugsweise in ihrer Längsmitte am breitesten und ihre Breite nimmt zu den Sickenenden hin ab (Anspruch 3). Diese Sickenausbildung ist verformungstechnisch vorteilhaft, da ein Tiefzieheffekt und eine damit verbundene Verdünnung des Bleches weitgehend vermieden werden kann. Durch Tiefziehen hergestellte Befestigungselemente sollen jedoch vom Schutz nicht ausgeschlossen sein.

Bei einem Befestigungselement von U-förmiger Gestalt sind die Versteifungssicken vorzugsweise in die U-Schenkel hinein fortgesetzt (Anspruch 4). Das Weiterführen der Sicken über die Abkantungen in die U-Schenkel hinein ist insbesondere dadurch möglich, daß die Sicken zu ihren Enden hin verhältnismäßig niedrig sind. Die Erfindung bezieht sich nicht nur auf Befestigungselemente von U-förmiger Gestalt, sondern auch auf etwa entsprechend einer Zylinderfläche gewölbte Befestigungselemente, wie sie für die Befestigung von gewellten Bautafeln verwendet werden. Die Erfindung erstreckt sich auch auf ebene Befestigungselemente, oder auf konvex gewölbte Befestigungselemente, da auch bei solchen Befestigungselementen die besondere Form der Sicken eine erhöhte Biegesteifigkeit bei gegebenen Materialaufwand ergibt.

Die Versteifungssicken können auch vor den Rändern des Befestigungselementes enden (Anspruch 5). Dies hat den Vorteil, daß die Seittenränder parallel zur Oberfläche der Bauplatte verlaufen, wodurch eine optimale Abdichtung erreicht wird. Wenn die Sicken bis zum Rand reichen, könnten im Sickenbereich Kanäle entstehen, über die Wasser einsickern kann. Es lassen sich aber auch Befestigungselemente vollkommen abdichten, deren Versteifungssicken bis zum Rand reichen, wenn geeignete weichelastische Dichtungen oder geeignete Dichtungsmassen verwendet werden, die die Sicken vollständig ausfüllen.

Vorzugsweise ist die Blechdicke in allen Bereichen des Befestigungselementes etwa gleich groß (Anspruch 6). Dies ergibt sich, wenn das Befestigungselement durch Verformen eines Bleches gebildet wird, wobei ein Tiefziehen des Bleches möglichst vermieden wird. Dies läßt sich insbesondere dadurch verwirklichen, daß die Sicken in ihren hohen Bereichen breiter sind als in ihren niedrigen Bereichen, wie dies im Anspruch 3 angegeben ist. Wenn man bei der Herstellung eines solchen Befestigungselementes von einem rechteckig oder quadratisch zugeschnittenen Blech ausgeht, erhält man an den Seiten, die im wesentlichen parallel zu den Sicken verlaufen, konkave Einziehungen gemäß Anspruch 7. Das Befestigungselement läßt sich jedoch auch mit geraden Seitenkanten herstellen, z.B. dadurch, daß nach dem Pressen ein Beschneiden der Seitenkanten stattfindet oder dadurch, daß der Zuschnitt entsprechend geformt wird.

Für die Herstellung des Befestigungselementes kommen verschiedene Materialien in Betracht. Besonders gut geeignet ist Aluminiumblech wegen seiner Witterungsbeständigkeit. Bei höheren Anforderungen an die Festigkeit kann man auch entsprechend rostgeschütztes, z.B. verzinktes Stahlblech verwenden. Auch weitere Materialien kommen in Betracht. Vorzugsweise ist das Befestigungselement gemäß Anspruch 9 an seiner Unterseite mit einer elastischen Dichtungsschicht ausgerüstet.

In der Zeichnung ist ein Ausführungsbeispiel der Erfindung dargestellt. Es zeigen:

Fig. 1 eine perspektivische Darstellung eines Teiles einer Dacheindeckung,

Fig. 2 eine perspektivische Darstellung eines Befestigungselementes,

Fig. 3 eine Draufsicht auf das Befestigungselement,

Fig. 4 eine Seitenansicht des Befestigungselementes entsprechend dem Pfeil IV in Fig. 3,

Fig. 5 eine Seitenansicht des Befestigungselementes in Richtung des Pfeiles V in Fig. 4 und

Fig. 6 bis 8 Querschnitte durch das Befestigungselement entsprechend den Linien VI-VI bis VIII-VIII, wobei die Schnitte gegenüber der klapprichtigen Lage um 90° im Uhrzeigersinn verschwenkt sind.

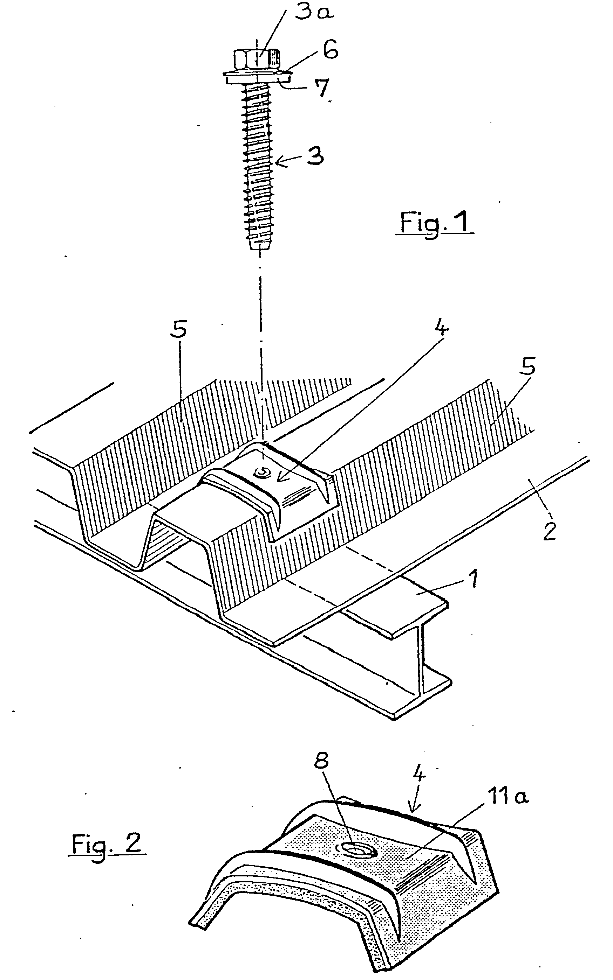

Die in Fig. 1 dargestellte Dachkonstruktion hat eine Unterkonstruktion, von der nur ein I-Träger dargestellt ist und Deckenplatten 2, die mittels Befestigungsschrauben 3 und Befestigungselementen 4 festgehalten werden. Dargestellt ist eine Dachtafel 2 mit Sicken 5 von trapezförmigem Querschnitt. Das Befestigungselement 4 ist entsprechend U-förmig gebogen, so daß es über nach oben ragende Sicken 5 paßt. Die Befestigungsschraube 3 ist selbstschneidend, d.h. sie kann in ein vorgebohrtes Loch im I-Träger 1 selbst ein Gewinde einschneiden. Unterhalb des Sechskantkopfes 3a der Befestigungsschraube befindet sich eine gewölbte Blechscheibe 6, die an ihrer Unterseite mit einer weichelastischen Dichtungsschicht 7 versehen ist. Gegenstand der Erfindung ist das Befestigungselement 4, das nachfolgend anhand der Fig. 2 bis 8 betrachtet werden soll.

Das Befestigungelement 4 besteht aus einem Blechteil 11 und einer weichelastischen Dichtungsschicht 12, die mit dem Blechteil 11 durch Verklebung oder Vulkanisierung verbunden ist. Die Gestalt ist insgesamt U-förmig, wobei der Stegteil 11a und die U-Schenkel 11b gerade ausgebildet sind und an Abkantungen 11c ineinander übergehen.

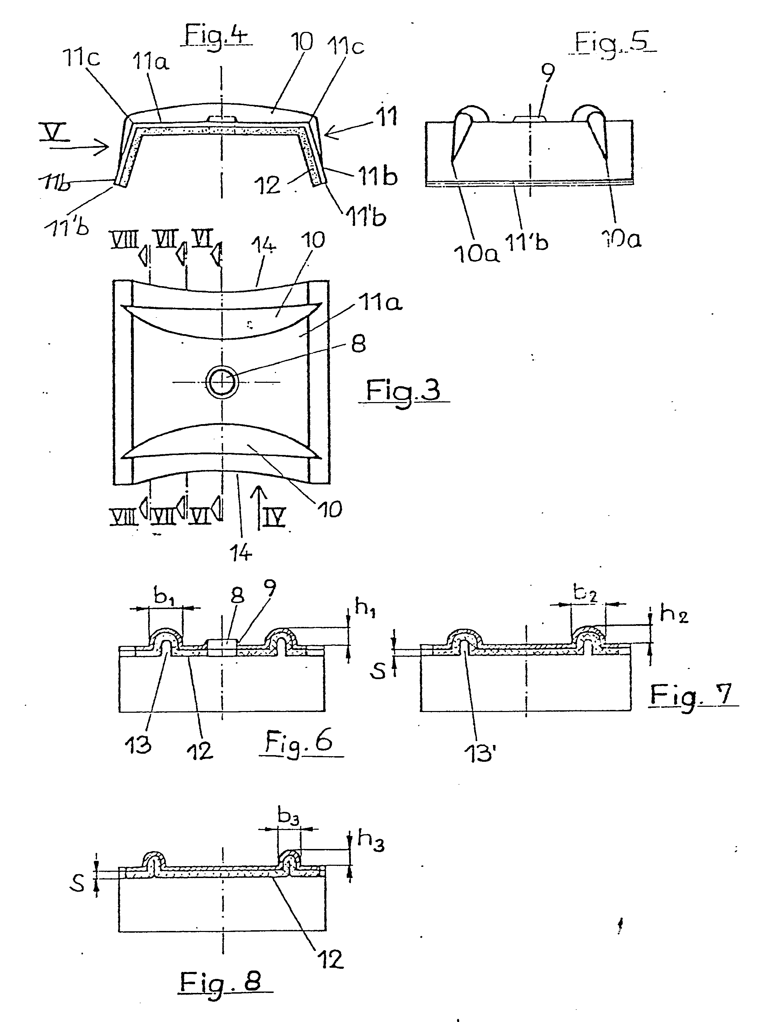

Im Zentrum des Stegteiles 11a befindet sich ein Durchsteckloch 8 für die Befestigungsschraube 3. Das Durchsteckloch ist von einem Kragen 9 umgeben, der insbesondere in Fig. 6 gut erkennbar ist. Beiderseits des Befestigungsloches erstrecken sich Sicken 10, die den U-förmigen Querschnitt folgen, wie man insbesondere aus Fig. 4 ersehen kann. Die Sicken 10 sind über die Abkantungen 11c hinaus bis in die Schenkel 11b hinein fortgesetzt, enden jedoch vor den unteren Rändern 11'b der Schenkel, so daß diese Ränder gerade durchlaufen.

Fig. 4 und die Schnitte nach den Fig. 6, 7 und 8 zeigen, daß die Sicken 10 in ihrer Längsmitte, d.h. im Bereich des Durchstecklöches 8, am höchsten sind und ihre Höhe zu den Sickenenden hin abnimmt. An ihren höchsten Stellen haben die Sicken 10 ihre größte Höhe $h_1$. Im Bereich des Schnittes VII-VII ist nur noch die kleinere Höhe $h_2$ vorhanden und im Bereich des Schnittes VIII-VIII nur noch die Höhe $h_3$, die noch geringer ist als die Höhe $h_2$. Die Sickenhöhe nimmt schließlich auf Null ab. Auch die Sickenbreite ist in der Längsmitte der Sicken 10 am höchsten. Sie beträgt im Bereich des Schnittes VI-VI $b_1$, im Bereich des Schnittes VII-VII $b_2$ und im Bereich des Schnittes VIII-VIII $b_3$.

Die Sickenbreiten $b_1$ und $b_2$ sind noch so groß, daß die Dichtungsschicht 12 Spalte 13 bzw. 13' übrig läßt, während die Sickenbreite $b_3$ nur noch so groß ist, daß die lichte Weite gleich oder sogar kleiner ist als die doppelte Dicke s der Dichtungsschicht 12, so daß ein Hohlraum nicht verbleibt.

Durch das Merkmal, daß die Enden 10a der Sicken 10 vor den Rändern 11'b enden, erreicht man, daß in den seitlichen Randbereichen des Befestigungselementes die Dichtungsschicht 12 eben ist und damit fest an den Seitenflächen der Sicken 5a der Dachtafel anliegt.

Wie man insbesondere aus der Draufsicht nach Fig. 3 sieht, sind die Seitenkanten 14 des Befestigungselementes, die etwa parallel zu den Sicken 10 verlaufen, konkav gekrümmt. Diese Krümmung ergibt sich bei der Herstellung des Befestigungselementes durch Pressen. Es wird ausgegangen von einem rechteckigen Blechzuschnitt. Bei der Einformung der Versteifungssicken 10 wird Material in den Bereich der Sicken gezogen, wobei die konkaven Krümmungen der Kanten entstehen. Die kokave Form der Kanten führt in Fig. 2 zu der optischen Täuschung, als ob die Stegfläche 11a gekrümmt ist. Tatsächlich ist diese Fläche eben, wie man aus der Seitenansicht nach Fig. 4 ersehen kann.

**Patentansprüche**

1. Befestigungselement (4) für die Befestigung von profilierten Bautafeln (2) an einer Unterkonstruktion (1), bestehend aus einem an die Wellen- oder Sickenform (5) der Bautafel (2) angepaßten Blech (11), in dem sich ein Loch (8) zum Durchstecken eines Verbindungselementes, z. B. einer Schraube (3), befindet und das seitlich des Loches (8) angeordnete Versteifungssicken (10) aufweist, die dem Profilierungsquerschnitt folgen, dadurch gekennzeichnet, daß die Versteifungssicken (10) in ihrer Längsmitte am höchsten sind (Höhe $h_1$) und ihre Höhe zu den Sickenenden (10a) hin abnimmt.

2. Befestigungselement nach Anspruch 1, dadurch gekennzeichnet, daß beiderseits des Loches (8) je eine Versteifungssicke (10) angeordnet ist.

3. Befestigungselement nach einem der vorhergehenden Ansprüche, dadurch gekennzeichnet, daß die Versteifungssicken (10) in ihrer Längsmitte am breitesten sind (Breite $b_1$) und ihre Breite zu den Sickenenden (18a) hin abnimmt.

4. Befestigungselement nach einem der vorhergehenden Ansprüche von U-förmiger Gestalt, dadurch gekennzeichnet, daß die Versteifungssicken in die U-Schenkel (11b) hinein fortgesetzt sind.

5. Befestigungselement nach einem der vorhergehenden Ansprüche, dadurch gekennzeichnet, daß die Versteifungssicken (10) vor den Rändern (11b) des Befestigungselementes enden.

6. Befestigungselement nach einem der vorhergehenden Ansprüche, dadurch gekennzeichnet, daß die Blechdicke in allen Bereichen etwa gleich ist.

7. Befestigungselement nach Anspruch 6, dadurch gekennzeichnet, daß die im wesentlichen parallel zu den Sicken (10) verlaufenden Seitenkanten (14) konkav eingezogen sind, wobei vorzugsweise der Abstand zwischen Seitenkante (14), und Sicke (10) in deren Längsmitte am kleinsten ist.

8. Befestigungselement nach einem der vorhergehenden Ansprüche, dadurch gekennzeichnet, daß es aus Aluminiumblech besteht.

9. Befestigungselement nach einem der vorhergehenden Ansprüche, dadurch gekennzeichnet, daß das Blech an seiner Unterseite eine elastische Dichtungsschicht (12) aufweist.

**Claims**

1. A fastening element (4) for fastening profiled structural panels (2) to a sub-structure (1). comprising a sheet (11) which is adapted to the undulating or corrugated shape (5) of the structural panels (2) and in which is provided a hole (8) for passing through a connexion element, e.g. a bolt (3), and which comprises reinforcing corrugations (10) which are disposed laterally of the hole (8) and which follow the cross-section of the profiling, characterized in that the reinforcing corrugations (10) are highest (height $h_1$) at their longitudinal centre and their height decreases towards the ends (10a) of the corrugations.

2. A fastening element according to Claim 1, characterized in that one reinforcing corrugation (10) is provided on both sides of the hole (8) in each case.

3. A fastening element according to one of the preceding Claims, characterized in that the reinforcing corrugations (10) are widest (width $b_1$) at their longitudinal centre and their width decreases towards the ends (10a) of the corrugations.

4. A fastening element according to any one of the preceding Claims of U-shaped design, characterized in that the reinforcing corrugations are continued into the U-shaped arms (11b).

5. A fastening element according to any one of the preceding Claims, characterized in that the reinforcing corrugations (10) terminate in front of the edges (11b) of the fastening element.

6. A fastening element according to any one of the preceding Claims, characterized in that the thickness of the sheet is approximately the same in all areas.

7. A fastening element according to Claim 6, characterized in that the lateral edges (14) extending essentially parallel to the corrugations (10) are constricted in a concave manner, the distance between the lateral edge (14) and the corrugation (10) being smallest at their longitudinal centre.

8. A fastening element according to any one of the preceding Claims, characterized in that it consists of aluminium sheet.

9. A fastening element according to any one of the preceding Claims, characterized in that on its underside the sheet comprises a resilient sealing layer (12).

**Revendications**

1. Elément de fixation (4) pour la fixation de plaques profilées (2) à une infrastructure (1), constitué d'une pièce en tôle (11) adaptée à la forme des ondes ou des nervures (5) de la plaque (2), cette pièce en tôle présentant un trou (8) pour le passage d'un élément d'assemblage, par exemple d'une vis (3), et comportant, sur le côté de ce trou (8), des nervures de raidissenent (10) qui suivent la section du profil, caractérisé en ce que les nervures de raidissenent (10) sont le plus hautes (hauteur $h_1$) en leur milieu longitudinal et leur hauteur diminue vers leurs extrémités (10a).

2. Elément de fixation selon la revendication 1, caractérisé en ce qu'une nervure de raidissement (10) est prévue de chaque côté du trou (8).

3. Elément de fixation selon l'une des revendications précédentes, caractérisé en ce que les nervures de raidissement (10) sont le plus larges (largeur $b_1$) en leur milieu longitudinal et leur largeur diminue vers leurs extrémités (10a).

4. Elément de fixation selon l'une des revendications précédentes, en forme de U, caractérisé en ce gue les nervures de raidissement se continuent sur les ailes (11b) du U.

5. Elément de fixation selon l'une des revendications précédentes, caractérisé en ce que les nervures de raidissenent (10) se terminent avant ses bords (11'b).

6. Elément de fixation selon l'une des revendications précédentes, caractérisé en ce que l'épaisseur de la pièce en tôle est à peu près la même partout.

7. Elément de fixation selon la revendication 6, caractérisé en ce que les bords latéraux (14) sensiblement paralléles aux nervures (10) sont concaves, la distance entre bord latéral (14) et nervure (10) étant de préférence la plus petite au milieu longitudinal de la nervure.

8. Elément de fixation selon l'une des revendications précédentes, caractérisé en ce qu'il est en tôle d'aluminium.

9. Elément de fixation selon l'une des revendications précédentes, caractérisé en ce que la pièce en tôle présente sur le dessous une couche élastique d'étanchéité (12).

Fig. 1

Fig. 2

Fig.4

Fig.5

Fig.3

Fig.6

Fig. 7

Fig. 8